# DEMANDE DE BREVET EUROPEEN

(11) **EP 1 560 033 A1**
(43) Date de publication de la demande: **03.08.2005**
(21) Numéro de dépôt: 05366001.5
(22) Date de dépôt: 21.01.2005
(51) Int. Cl.: G01R 31/3185, G06F 12/14, G01R 31/317

(54) **Circuit intégré comportant un mode de test sécurisé par initialisation du dit mode de test**

(30) Priorité: 29.01.2004 FR 0400835
(71) Demandeur: STMicroelectronics S.A., 92120 Montrouge (FR)
(72) Inventeur: Bancel, Frédéric, Cabinet Ballot, Technopôle, 57070 Metz (FR); Hely, David, Cabinet Ballot, Technopôle, 57070 Metz (FR)
(74) Mandataire: Brungard, Yves

(57) **Abrégé**

L'invention concerne un circuit électronique comprenant un mode de test en application de la technique "internal scan path". Le circuit électronique comprenant une pluralité de cellules configurables, et un circuit de commande, le dit circuit électronique étant adapté pour fonctionner dans un mode de fonctionnement standard ou dans un mode de test au cours duquel le circuit de commande est actif et configure les dites cellules configurables :
* soit dans un état fonctionnel
* soit dans un état chaîné dans lequel les cellules configurables sont fonctionnellement connectées en chaîne pour former un registre à décalage.

Selon l'invention, le circuit comprend en outre un circuit de validation agencé pour, successivement, lorsque le dit circuit de validation reçoit une instruction de changement de mode de fonctionnement (TEST, FIN) du circuit électronique :
- produire des signaux d'initialisation (INIT1, INIT2, ..., INITN) pour commander l'initialisation de toutes les cellules configurables, puis
- produire un signal de changement de mode (VAL).

Application aux circuits électroniques utilisant des données sensibles.

## Description

L'invention concerne, de façon générale, les circuits électroniques intégrés synchrones munis de moyens de logique combinatoire, de bascules, et de moyens de test. Plus précisément, l'invention concerne un circuit électronique comprenant une pluralité de cellules configurables et un circuit de commande, le dit circuit électronique étant adapté pour fonctionner dans un mode de fonctionnement standard ou dans un mode de test au cours duquel le circuit de commande est actif et configure les dites cellules configurables :
* soit dans un état fonctionnel dans lequel les cellules configurables sont fonctionnellement reliées à des cellules logiques avec lesquelles elles coopèrent pour former un circuit logique,
* soit dans un état chaîné dans lequel les cellules configurables sont fonctionnellement connectées en chaîne pour former un registre à décalage.

Il est aujourd'hui bien connu de tester le fonctionnement correct des éléments fonctionnels d'un circuit intégré en imposant et / ou en déterminant, à des instants prédéfinis, des valeurs de données présentes en certains points internes de ce circuit intégré.

Une telle technique de test de chemins internes d'un circuit intégré (désignée par "scanpath" ou "internal scan method" en langue anglaise) est par exemple décrite dans la publication de M. Williams et J. Angel, intitulée "Enhancing Testability of LSI Circuits Via Test Points and Additional Logic, IEEE Transactions on Computers, vol. C-22, no.1; Janvier 1973".

Selon cette technique, chacune des bascules du circuit logique, dont il est utile de connaître l'état et / ou d'imposer le contenu durant le fonctionnement standard du circuit intégré, est dotée à son entrée d'un multiplexeur.

Les différentes bascules et les multiplexeurs qui leur sont associés constituent ainsi autant de cellules configurables dont les accès sont individuellement contrôlés par ces multiplexeurs.

Les multiplexeurs de ces différentes cellules configurables sont collectivement commandés par un contrôleur d'accès ou "contrôleur TAP" ("TAP" pour "Test Access Port" en langue anglaise) qui est inactif ou actif selon un mode de fonctionnement choisi du circuit électronique (mode de fonctionnement standard ou mode de test). Lorsque le contrôleur TAP est activé par un signal de commande de mode (passage en mode de test du circuit électronique), il utilise cet ensemble de cellules configurables soit comme un circuit fonctionnel standard, intégré au circuit logique qu'il forme avec les cellules logiques, soit comme un circuit de test.

Pour ce faire, le contrôleur TAP adresse sur différents conducteurs de commande, par lesquels il est relié aux différentes cellules configurables, des signaux de commande, tels qu'un signal de commande de chaînage ou encore un signal de commande de propagation de données, qui modifient les chemins de circulation des données au sein du circuit intégré et qui permettent ainsi la capture de ces données par le contrôleur, en vue de leur analyse.

En mode de fonctionnement standard, le contrôleur TAP est inactif et les multiplexeurs des cellules configurables sont positionnés de manière telle que les bascules de ces cellules soient connectées à des cellules logiques environnantes pour définir un ou plusieurs sous-ensembles fonctionnels du circuit intégré.

Dans le mode de test du circuit électronique, le contrôleur TAP est normalement activé par une commande d'exécution de test reçue de l'extérieur, et il peut produire un signal de commande de chaînage pour connecter en série les bascules des cellules configurables de manière à former un registre à décalage.

Ce registre comporte notamment une entrée série et une sortie série respectivement connectées à une sortie et à une entrée du contrôleur TAP, ainsi qu'une entrée d'horloge recevant un signal d'horloge pour cadencer le flot de données.

Un test du circuit intégré est réalisé en activant le contrôleur TAP ; le test comprend principalement les trois étapes suivantes.
- Dans un premier temps, le contrôleur TAP configure les cellules en mode de test puis charge en série des données dans les bascules des cellules configurables par l'entrée du registre à décalage que forment ces cellules.
- Puis, le contrôleur TAP change la commutation des multiplexeurs pour former le circuit fonctionnel (mode de fonctionnement standard), et commande l'exécution d'un ou plusieurs cycles d'horloge par ce circuit fonctionnel. Les données chargées dans les bascules des cellules configurables sont alors traitées par le circuit fonctionnel.
- Le contrôleur change alors une nouvelle fois la commutation des multiplexeurs pour former à nouveau le registre à décalage (mode de test) et récupère, en série sur la sortie du registre à décalage, les données mémorisées dans les bascules des cellules configurables durant le dernier cycle d'horloge.

Après déchargement complet des données, un nouveau test peut éventuellement être exécuté. Après réalisation de tous les test, le contrôleur produit un signal indiquant la fin du mode de test (désactivation par le contrôleur du signal de commande de test).

En dépit de l'intérêt confirmé de cette technique de test, son application pratique peut en certaines circonstances s'avérer problématique, notamment sur les circuits intégrés qui traitent des données secrètes.

En effet, dans la mesure où l'activation du mode de test peut permettre à un fraudeur de lire le contenu des bascules des cellules configurables, cette technique de test présente a priori l'inconvénient de rendre de tels circuits très vulnérables à une utilisation frauduleuse.

Par exemple, en stoppant à divers moments un processus de chargement interne de données secrètes dans le circuit intégré et en déchargeant le contenu du registre à décalage, un fraudeur pourra obtenir des informations sur des données secrètes, voire les reconstituer.

En activant le mode de test, un fraudeur pourra également accéder en écriture aux bascules des cellules configurables pour insérer des données frauduleuses, ou bien pour placer le circuit intégré dans une configuration non autorisée. Il pourra ainsi par exemple accéder à un registre contrôlant un organe sécuritaire tel qu'un capteur pour le désactiver. Il pourra également injecter une donnée erronée en vue d'obtenir de l'information sur une donnée secrète.

Le but de l'invention est précisément de proposer un circuit électronique conçu pour faire échec à ce type de tentative de fraude.

A cette fin, le circuit électronique de l'invention, par ailleurs conforme à la définition générique qu'en donne le préambule ci-dessus, est essentiellement caractérisé en ce qu'il comprend en outre un circuit de validation agencé pour, successivement, lorsque le dit circuit de validation reçoit une instruction de changement de mode de fonctionnement du circuit électronique :
- produire des signaux d'initialisation pour commander l'initialisation de toutes les cellules configurables, puis
- vérifier que les cellules configurables ont été correctement initialisées, puis
- produire un signal de changement de mode si les cellules ont été correctement initialisées.

Ainsi, avec l'invention, à chaque changement de mode, les cellules configurables sont initialisées. Interrompre le fonctionnement standard du circuit électronique, passer en mode de test et décharger le contenu des bascules ne permet plus d'obtenir des informations sur le contenu des cellules configurables à l'instant de l'interruption. De la même façon, si des données sont introduites dans les cellules configurables juste avant de passer du mode de test au mode standard, ces données sont effacées par une initialisation avant d'activer le mode standard. Il n'est donc plus possible d'injecter des données erronées.

La vérification de l'état des cellules permet notamment de vérifier que les signaux d'initialisation ont été correctement envoyés, qu'il n'y a pas de rupture des conducteurs sur lesquels transitent ces signaux, etc.

Selon un mode préféré de réalisation, le circuit de validation comprend un circuit de vérification qui reçoit des signaux de sortie de données des cellules configurables et délivre un signal d'état adoptant sélectivement un état représentatif d'une initialisation correcte ou un état représentatif d'une initialisation incorrecte des cellules configurables, selon que les signaux de sortie correspondent, ou non, à des signaux de sortie prédéfinis.

D'autres caractéristiques et avantages de l'invention ressortiront clairement de la description qui est faite ci-après d'un mode préféré de réalisation. Cette description est faite à titre indicatif et nullement limitatif, en référence au dessin unique annexé, dans lequel :
- la figure 1 est un circuit électronique comprenant un mode de test sécurisé selon l'invention,
- la figure 2 est un exemple de réalisation d'un circuit de validation utilisé dans le circuit de la figure 1.

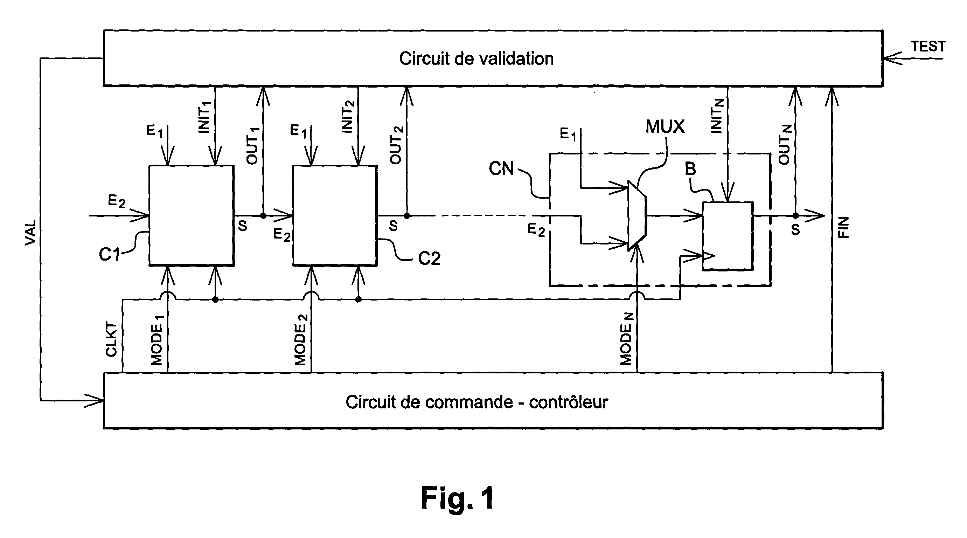

Le circuit de la figure 1 comprend notamment un ensemble de cellules configurables C1, ..., CN identiques (seule la cellule CN est détaillée) et un circuit de commande (ou contrôleur TAP), formant ensemble un circuit identique à un circuit électronique connu tel que décrit dans le préambule de la description.

Chaque cellule configurable comprend un multiplexeur MUX et une bascule B, par exemple de type Flip-Flop. Le circuit TAP produit les signaux de commande MODE1, MODE2, ..., MODEN (issus d'une même source), chaque signal venant respectivement configurer une cellule C1, ..., CN, et plus précisément le multiplexeur MUX cette cellule.

Lorsque les signaux MODE1, MODE2, ..., MODEN sont inactifs, dans chaque cellule configurable, le multiplexeur MUX relie une entrée de donnée de la bascule B à une entrée de données E1 de la cellule, la dite entrée E1 étant fonctionnellement reliée à une ou plusieurs cellules logiques (non représentées) avec lesquelles la bascule coopère pour former un circuit logique.

Inversement, lorsque le contrôleur produit les signaux MODE1, MODE2, ..., MODEN actifs, dans chaque cellule, le multiplexeur MUX relie l'entrée de donnée de la bascule B à une entrée de données E2 de la cellule, la dite entrée E2 étant fonctionnellement reliée à une sortie S de donnée d'une cellule précédente. L'ensemble des N cellules forme ainsi un registre à décalage. L'entrée E2 de la première cellule C1 forme l'entrée du registre à décalage et la sortie S de la dernière cellule CN forme la sortie du dit registre.

Dans un circuit connu, comme cela a été décrit précédemment, le mode de test est activé (et en conséquence le mode de fonctionnement standard désactivé) lorsque le contrôleur est activé par un signal venu de l'extérieur ; et le mode de test est désactivé lorsque le contrôleur produit un signal indiquant la fin du déchargement de données contenues dans les cellules configurables.

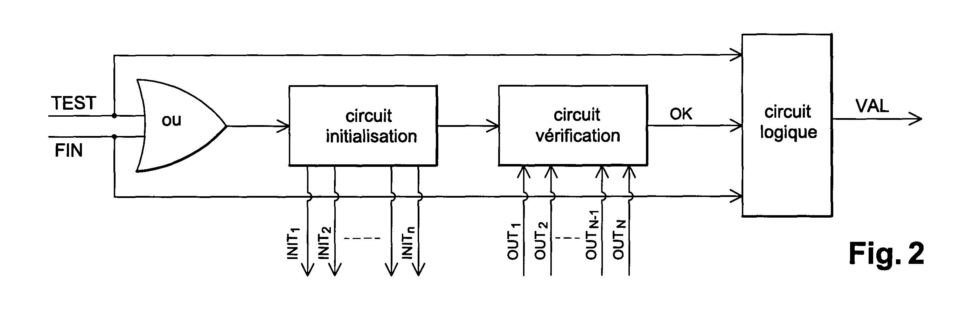

Selon l'invention, le circuit connu est complété par un circuit de validation qui va gérer le début et la fin d'un mode de test. Un exemple de circuit de validation est représenté sur la figure 2.

Le circuit de validation comprend un circuit d'initialisation qui produit un ensemble de signaux d'initialisation INIT1, ..., INITN, lorsqu'il reçoit (représenté par la porte logique OU (figure 2) :
- le signal externe TEST actif, signifiant qu'un utilisateur extérieur souhaite réaliser un test, ou
- le signal FIN émis par le contrôleur TAP signifiant qu'il a terminé la phase de test.

Chaque signal INIT1, ..., INITN vient initialiser respectivement une cellule C1, ..., CN, et plus précisément vient imposer une valeur initiale à la bascule B de cette cellule.

Le circuit de validation comprend également un circuit de vérification qui reçoit un ensemble de signaux de sortie OUT1, OUT2, ..., OUTN, correspondant respectivement aux signaux de sortie des cellules C1, C2, ..., CN. Lorsque le circuit de vérification est activé par le circuit d'initialisation, il vérifie que les signaux OUT1, ..., OUTN ont des valeurs correspondant aux valeurs initiales attendues. Le circuit de vérification est par exemple un circuit de logique combinatoire, qui combine les signaux OUT1, ..., OUTN, ou seulement une partie d'entre eux, et délivre un signal de sortie OK qui est actif ou inactif selon que la combinaison des signaux correspond ou non à une valeur attendue. Les signaux OUT1, OUT2, OUTN ne sont pas nécessairement tous égaux à 1 ou à 0, mais ont toujours une même valeur après chaque initialisation, de sorte que, à chaque initialisation valablement réalisée, la combinaison des signaux OUT1, ..., OUTN a toujours la même valeur attendue.

Dans l'exemple, le circuit de validation comprend enfin un circuit de logiques qui produit le signal VAL à partir des signaux OK, TEST, et / OU FIN. Le signal VAL est:
- actif si les signaux test et OK sont actifs, ou
- inactif si les signaux FIN et OK sont actifs.

Le fonctionnement global du circuit électronique selon l'invention est le suivant. On suppose qu'initialement, le circuit est en mode de fonctionnement standard, le contrôleur et le circuit de validation sont donc inactifs.
1. Lorsque le circuit de validation reçoit une commande d'exécution d'un test (signal TEST actif),
   - le circuit d'initialisation :
      * produit les signaux INIT1, ..., INITN actifs,
      * active le circuit de vérification, puis
   - le circuit de vérification reçoit les signaux OUT1, ..., OUTN, les vérifie et produit le signal OK actif si c'est signaux ont une valeur prédéfinie attendue,
   - le signal VAL est activé (signaux TEST et OK actifs)
   - le contrôleur est activé par le signal VAL (passage du circuit électronique du mode fonctionnel au mode de test) et réalise le test en pilotant les cellules alternativement dans un état fonctionnel ou dans un état chaîné. Le contrôleur produit ensuite le signal FIN actif indiquant qu'il a terminé le test.
2. Lorsque le circuit de validation reçoit le signal FIN actif produit par le contrôleur,
   - le circuit d'initialisation :
      * produit les signaux INIT1, ..., INITN actifs,
      * active le circuit de vérification, puis
   - le circuit de vérification reçoit les signaux OUT1, ..., OUTN, les vérifie et produit le signal OK actif si c'est signaux ont une valeur prédéfinie attendue,
   - le contrôleur est désactivé par le signal VAL inactif (signaux FIN, OK actifs) : passage du circuit électronique du mode de test au mode fonctionnel.

## Revendications

1. Circuit électronique comprenant une pluralité de cellules configurables, et un circuit de commande, le dit circuit électronique étant adapté pour fonctionner dans un mode de fonctionnement standard ou dans un mode de test au cours duquel le circuit de commande est actif et configure les dites cellules configurables :
* soit dans un état fonctionnel dans lequel les cellules configurables sont fonctionnellement reliées à des cellules logiques avec lesquelles elles coopèrent pour former un circuit logique,
* soit dans un état chaîné dans lequel les cellules configurables sont fonctionnellement connectées en chaîne pour former un registre à décalage,
**caractérisé en ce qu'**il comprend en outre un circuit de validation agencé pour, successivement, lorsque le dit circuit de validation reçoit une instruction de changement de mode de fonctionnement (TEST, FIN) du circuit électronique :
- produire des signaux d'initialisation (INIT1, INIT2, ..., INITN) pour commander l'initialisation de toutes les cellules configurables, puis
- vérifier que les cellules configurables ont été correctement initialisées, puis
- produire un signal de changement de mode (VAL) si les cellules ont été correctement initialisées.

2. Circuit selon la revendication 1, dans lequel le circuit de validation comprend un circuit de vérification qui reçoit des signaux de sortie de données (CUT1, OUT2, ..., OUTN) des cellules configurables et délivre un signal d'état adoptant sélectivement un état représentatif d'une initialisation correcte ou un état représentatif d'une initialisation incorrecte des cellules configurables, selon les signaux de sortie correspondent, ou non, à des signaux de sortie prédéfinis.

3. Circuit selon la revendication 2, dans lequel le circuit de vérification est un circuit de logique combinatoire, qui opère une combinaison logique de tout ou partie des dits signaux de sortie, et délivre le signal d'état.

4. Circuit selon l'une des revendications précédentes, dans lequel les signaux d'initialisation (INIT1, INIT2, ..., INIT3) sont appliqués respectivement sur une entrée d'initialisation des bascules des cellules configurables.
